(19) **Europäisches Patentamt / European Patent Office / Office européen des brevets**

(11) **EP 3 544 796 B1**

(12) **FASCICULE DE BREVET EUROPEEN**

(45) Date de publication et mention de la délivrance du brevet:
**15.12.2021 Bulletin 2021/50**

(21) Numéro de dépôt: **17873234.3**

(22) Date de dépôt: **23.11.2017**

(51) Int Cl.:
*B29C 70/52* (2006.01)     *B29C 35/10* (2006.01)
*B29C 70/06* (2006.01)     *B29C 71/04* (2006.01)
*B29C 70/50* (2006.01)     *B29C 35/02* (2006.01)
*B29C 70/02* (2006.01)     *B29C 70/64* (2006.01)
*B29C 35/08* (2006.01)

(86) Numéro de dépôt international:
**PCT/CA2017/051401**

(87) Numéro de publication internationale:
**WO 2018/094521 (31.05.2018 Gazette 2018/22)**

(54) **MÉTHODE ET SYSTÈME POUR RÉALISER UNE BARRE D'ARMATURE**

VERFAHREN UND SYSTEM ZUR HERSTELLUNG EINES BEWEHRUNGSSTABS

METHOD AND SYSTEM FOR PRODUCING A REINFORCING BAR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.11.2016 US 201662426022 P**

(43) Date de publication de la demande:
**02.10.2019 Bulletin 2019/40**

(73) Titulaire: **Pultrall Inc.**
**Thetford Mines, Québec G6G 6Z5 (CA)**

(72) Inventeurs:
• **LALLIER, Alexandre**
**Thetford Mines, Québec G6H 1R4 (CA)**
• **ST-CYR, Danny**
**Thetford Mines, Québec G6H 2G5 (CA)**

(74) Mandataire: **Murgitroyd & Company**
**Murgitroyd House**
**165-169 Scotland Street**
**Glasgow G5 8PL (GB)**

(56) Documents cités:
| | |
|---|---|
| EP-A2- 0 199 348 | CA-A1- 2 596 911 |
| CA-A1- 2 596 911 | CA-A1- 2 746 281 |
| GB-A- 1 393 756 | GB-A- 1 393 756 |
| JP-A- H01 174 691 | US-A- 5 650 220 |
| US-A- 5 700 417 | US-A1- 2008 318 042 |
| US-A1- 2008 318 042 | US-A1- 2012 204 499 |
| US-A1- 2012 204 499 | US-A1- 2013 239 503 |
| US-A1- 2013 239 503 | US-A1- 2015 204 075 |
| US-A1- 2016 089 820 | US-A1- 2016 089 820 |

**Description**

**Domaine de l'invention:**

La présente invention concerne une méthode et un système pour réaliser une barre d'armature. Plus particulièrement, la présente invention concerne une méthode et un système pour réaliser une barre d'armature par un procédé modifié de pultrusion, et concerne également un système pour réaliser une barre d'armature par un procédé modifié de pultrusion.

**Description de l'art antérieur:**

Les moyens de réaliser des barres d'armature sont connus de US2008/318042.

En effet, il est bien connu que le renforcement du béton nécessite la présence de barres de renfort. Ces barres sont traditionnellement réalisées en acier. Le désavantage de ce matériau est que la corrosion est, dans certaines conditions, en mesure d'affaiblir les tiges. Pour pallier à ce type de problème, des tiges de renfort utilisant des matériaux capables de résister à la corrosion ont été développées. Ces tiges en matériaux composites sont principalement réalisées par le moyen de la pultrusion.

Un des premiers brevets ayant pour sujet la fabrication de profilés de section uniforme par la technique de la pultrusion est le brevet US 2,871,911 (SHUTTLEWORTH). Le procédé consiste principalement à saturer des fibres avec de la résine liquide, de passer ces fibres saturées dans deux filières successives, une filière de compression, et une autre filière en mesure de produire un champ d'ondes radio. Le chauffage des fibres saturées de résine liquide thermodurcissable est assuré par cette deuxième filière ce qui permet d'exécuter la principale étape de polymérisation. Un supplément de chauffage peut être apporté par la combustion d'un gaz s'il est requis d'obtenir un taux de polymérisation plus élevé.

Pour chaque changement du diamètre de tige qui doit être réalisé, deux coûteuses filières, ayant les bons diamètres, doivent être installées sur le dispositif de production qui y est décrit.

Ce procédé de réalisation est en mesure de réaliser une tige de section uniforme ayant une bonne résistance mécanique et une bonne précision géométrique. Cependant, comme le procédé de réalisation est général et qu'il n'est pas spécifiquement destiné à la réalisation de barres de renforcement pour béton, le document est muet au sujet des moyens par lesquels la tige peut être texturée de manière à être ancrée dans le béton, etc.

Une autre méthode de réalisation est décrite dans le brevet US 4,168,194 (STILES) qui nous montre comment il est possible, sans utiliser de filière, de réaliser une tige construite à l'aide de fibres de verre et d'une résine liquide thermodurcissable. Son dispositif permet de limiter l'écoulement de la résine, qui n'est pas contenue par la présence d'une filière en contrôlant la viscosité de celle-ci en provoquant une série d'étapes de polymérisation partielles à l'aide d'une série de fours radiants séquentiels. La polymérisation partielle, qui augmente la viscosité du liquide à chaque étape, se fait sur un faisceau dont les fibres deviennent successivement de plus en plus rapprochées et qui forment finalement une tige compacte. L'avantage de cette méthode est qu'il n'y a pas de filières. Encore dans ce cas, la méthode est générale et n'est pas spécifiquement destinée à la réalisation de tiges de renfort pour béton. Le désavantage de cette méthode provient de la complexité des éléments qui rapprochent les fibres les unes des autres à chaque étape. Lors d'un remplacement de filaments, le ré-effilement devient une tâche ardue.

La polymérisation déclenchée à l'aide de rayon ultraviolet est, dans le domaine de la pultrusion, démontrée dans le brevet US 4,861,621 (KANZAKI) qui utilise une filière transparente au rayonnement ultraviolet pour ainsi permettre de compresser les faisceaux de fibres et dans le même temps amorcer la polymérisation grâce à une illumination de la matrice à l'aide d'une source de lumière ultraviolette. La polymérisation débute dans la filière et se propage de la surface vers le cœur de la tige. Cette méthode possède le désavantage de nécessiter une filière complexe, construite dans un matériau transparent et munie de sources d'éclairages. Là encore, pour chaque diamètre de tige à réaliser, il est nécessaire d'installer une filière de dimension idoine.

L'utilisation de fils de consolidations, enseignés dans le brevet de la Demanderesse CA 2,746,281 (ST-CYR et coll.), montre par quels moyens il est possible de produire une tige sans l'utilisation d'une filière. Dans ce brevet, il est montré comment un faisceau de fibres saturé de résine liquide passe dans un four pour que la résine puisse polymériser. Des fils, qui gainent la tige, sont enroulés immédiatement après l'étape de saturation. Ces fils de consolidations permettent de retenir les faisceaux de fibres pendant que la résine qui l'imbibe passe, sous l'effet de la polymérisation réalisée dans le four d'un état de liquide à solide. Dans cette méthode, les fils de consolidations retiennent les filaments du faisceau mais ne le compriment, du moins, pas de manière significative. La compression est en effet assurée par un anneau de constriction qui expurge la résine excédentaire en rapprochant les fibres du faisceau.

La nécessité de réaliser un ancrage des tiges de renfort dans le béton a donné lieu à diverses solutions telles que la texturation de la surface à l'aide de moyens mécaniques, l'ajout en surface de la tige d'entailles, tel que montré dans le brevet US 5,362,542 (OAZAWA et coll.), de fils de diamètres importants torsadés et collés ou encore texturés par sertissage, voir le brevet US 6,612,085 (EDWARDS et coll.), ou encore de fixer sur la surface un second matériau de polymère thermoformable et moulé avec des stries ou aspérités, voir le brevet US 5,626,700 (KAISER).

La texturation par sertissage a le désavantage, pour une tige faite de matériaux composites, d'onduler les filaments du faisceau. Cette déviation des fibres hors de l'axe de la tige en diminue la résistance mécanique. Le recours à l'utilisation de stries ou d'encoches pour assurer un bon ancrage diminue de manière importante la résistance de la tige en sectionnant une partie des fibres du faisceau. La mise en place de fils torsadés de fort diamètre, voir le brevet US 9,149,993 (GIBSON), a le désavantage de produire une séquence de points de compression et fait ainsi onduler les fibres du faisceau et ainsi en fait diminuer la résistance mécanique.

L'utilisation de particules, et plus spécifiquement de sable, est connue et utilisée depuis longtemps par la Demanderesse, un autre exemple est donné par le document CA 2,586,394 (BRANDSTROM). En pratique, il est en généralement nécessaire de mettre une résine adhésive avant la pulvérisation du sable à la surface de la tige ce qui a pour désavantage la nécessité de faire appel à une étape supplémentaire.

La méthode de réalisation des tiges de renfort a une influence importante dans la capacité de réaliser des tiges ayant une bonne précision géométrique. Il est en effet utile de pouvoir assembler les tiges entre elles au moyen de manchons et autres accessoires de fixation. Ces manchons et fixations bénéficient grandement de pouvoir s'ajuster dans des tiges de renfort qui sont d'un diamètre ne variant pas trop, voir le brevet US 8,413,396 (OLIVA et coll.)

Au vu de ce qui précède, il serait donc très utile de pouvoir fournir une nouvelle méthode pour réaliser une barre d'armature qui pourrait offrir des solutions aux désavantages et/ou inconvénients associés aux méthodes conventionnelles connues, telles que celles décrites précédemment, par exemple.

### Résumé de l'invention:

Un objet de la présente invention est de fournir une méthode pour réaliser une barre d'armature qui, grâce à sa conception et ses étapes/composantes, satisfait certains des besoins susmentionnés, et est donc une amélioration par rapport à d'autres mécanismes, dispositifs et/ou méthodes connexes connus dans l'art antérieur.

Plus particulièrement, l'invention a pour objet une méthode avantageuse qui permet d'obtenir par un procédé de pultrusion modifié une barre d'armature pour le béton (et/ou tout autre type de matériau connexe, bien entendu).

L'objet susmentionné est atteint, tel que sera mieux compris ci-après, avec une méthode pour réaliser une barre d'armature selon les revendications 1 à 11.

Selon un autre aspect de la présente invention, celle-ci vise également un système selon les revendications 12 et 13.

Les objets, avantages, et autres caractéristiques de la présente invention deviendront plus apparents à la lecture de la description non limitative qui suit des modes de réalisation préférentiels de l'invention, montrés dans les dessins ci-joints, et donnés à titre d'exemple seulement.

### Brève description des dessins:

La Figure 1 montre une vue schématique générale du système qui permet de réaliser la méthode selon un mode de réalisation préférentiel de la présente invention.

La Figure 2 montre une vue de la structure des tiges selon trois étapes possibles du procédé. À la Figure 2a, la tige de renfort est montrée dans l'état qui existe immédiatement après l'enroulement des fils élastiques et avant son entrée dans l'enceinte d'exposition au champ de fréquence(s) radio. La Figure 2b montre la tige après sa sortie du champ de fréquence(s) radio. La Figure 2c montre la tige après sa sortie de l'enceinte où il y a sur celle-ci projection d'agrégats. Il est à noter que les fils élastiques ne sont plus visibles, car ils sont sous la couche d'agrégats.

La Figure 3 montre les différences dans la circularité des sections des tiges réalisées selon la méthode actuelle qui a lieu dans l'industrie, la méthode proposée par la présente invention, et la méthode qui utilise le procédé classique de pultrusion munie d'une filière.

La Figure 4 montre la proportion de fibres de verres dans les tiges réalisées selon la méthode actuelle qui a lieu dans l'industrie, la méthode proposée par la présente invention, et la méthode qui utilise le procédé classique de pultrusion munie d'une filière.

**Description détaillée de possibles modes de réalisation:**

Dans la description suivante, les mêmes repères numériques font référence à des composantes semblables. Les modes de réalisation (géométries, dimensions, etc.) illustrés dans les figures et les caractéristiques décrites dans la demande sont préférentiels seulement, donnés à titre indicatif seulement.

De plus, dans le contexte de la présente description, les expressions telles que "tige", "renfort", "barre", "armature", "système", "dispositif", "ensemble", "produit", "kit", etc. ainsi que toute autre expression équivalente et/ou mots composés de celles-ci, pourront être utilisées de façon interchangeable dans le contexte de la présente description. Ceci s'applique également pour d'autres expressions qui sont mutuellement équivalentes, telles que, par exemple: a) "méthode", "procédé", "système", "infrastructure", "usine", etc.; b) "production", "réalisation", "fabrication", "assemblage", etc.; c) "entraînement", "transmission", "transformation", "correction", "ajustement", "modification", "altération", etc.; ainsi que pour d'autres expressions étant mutuellement équivalentes, concernant les expressions susmentionnées et/ou tout autre aspect structurel et/ou fonctionnel de la présente description, tel qu'évident pour une personne versée dans l'art.

De plus, dans le contexte de la présente description, on doit considérer que tous les objets allongés ont implicitement un "axe longitudinal" et/ou une "ligne de centre", tel que l'axe longitudinal d'une tige, par exemple, ou la ligne de centre d'un ressort/parcours en spirale, et que les expressions telles que "connecté(e)" et "apte à être connecté(e)", ou "pivotante" et "apte à être pivoté(e)", peuvent être interchangées et sont mutuellement équivalentes.

De plus, certaines composantes du présent système et/ou étapes de la présente méthode étant décrites dans le présent mémoire descriptif peuvent être modifiées, simplifiées, omises et/ou interchangées, sans se départir de la portée de la présente invention selon les revendications, dépendamment des applications particulières pour lesquelles le présent système est conçu et/ou destiné, et dépendamment aussi des résultats souhaités, tel que brièvement décrit dans la présente et tel qu'évident aussi pour une personne versée dans le domaine.

En effet, tel que précédemment mentionné et de façon générale, la présente description, telle qu'illustrée dans les figures ci-jointes, concerne une méthode et/ou un système pour réaliser une barre d'armature. Plus particulièrement, la présente description concerne une méthode pour réaliser une barre d'armature par un procédé de pultrusion modifié, et concerne également une barre d'armature résultant de ladite méthode et/ou dudit système. La présente description concerne également un kit avec des composantes destinées pour mettre en œuvre la méthode et/ou pour réaliser la barre d'armature résultante, ainsi que des méthodes d'assemblage, d'opération et d'utilisation correspondantes.

Tel que peut être mieux compris par une personne versée dans le domaine en faisant référence aux figures ci-jointes, et de façon générale également, la présente méthode porte sur un méthode pour réaliser une barre d'armature par un procédé modifié de pultrusion, et peut comprendre les étapes générales suivantes: a) fournir une source de filaments; b) assembler des filaments en un faisceau; c) imprégner le faisceau d'une résine thermodurcissable; d) expurger de la résine excédentaire du faisceau; e) compresser le faisceau de façon radiale; f) exposer le faisceau à une source d'énergie radiante; g) projeter des particules sur le faisceau; et h) exposer le faisceau à un rayonnement pour amorcer en sa surface une polymérisation de la résine.

Tel que précédemment mentionné aussi, certaines et/ou plusieurs étapes de la présente méthode peuvent être modifiées, simplifiées, omises et/ou interchangées, sans se départir de la portée de la présente invention selon les revendications, dépendamment des applications particulières pour lesquelles le présent système est conçu et/ou destiné, et dépendamment aussi des résultats souhaités.

Par exemple, selon un mode de réalisation particulier, la méthode pour réaliser une tige de renfort (ex. pour béton, etc.) pourrait comprendre les étapes suivantes: a) assembler des fibres continues en un faisceau; b) saturer le faisceau d'une résine thermodurcissable; c) expurger la résine excédentaire en passant le faisceau dans un anneau constricteur; d) gainer de fils élastiques sous tension ledit faisceau; e) exposer le faisceau à un champ d'ondes radio; f) projeter des particules (ex. du sable) sur la surface du faisceau; et g) exposer le faisceau à une source d'éclairage pour amorcer en sa surface la polymérisation de la résine.

On pourrait également terminer l'apport d'énergie nécessaire à la polymérisation à l'aide de four à convection, four radiant (ex. incluant les micro-ondes, etc.), four à air pulsé et/ou par chauffage diélectrique.

La présente invention se distingue des méthodes existantes notamment par plusieurs aspects innovateurs (i.e. "nouveaux" et "inventifs") importants et différents.

Notamment, un de ces aspects innovateurs importants consiste à compresser le faisceau de façon "radiale" (et/ou de toute autre façon équivalente), comme par exemple, le fait de gainer de fils "élastiques" et "sous tension" un faisceau de fibres saturé de résine liquide de telle sorte à assurer la compression de celui-ci de manière "considérable", "centripète", et substantiellement "constante", etc.

Les fils élastiques peuvent être de section circulaire ou rectangulaire (et/ou autre) et être constitués de matériaux pouvant montrer une capacité à se déformer élastiquement d'une valeur approximative d'au moins 5 % (environ), mais de préférence, au moins 15 % (environ).

L'avantage que confère cette étape essentielle à l'invention est que les fibres du faisceau se rapprochent et ainsi le rapport "masse de fibre/masse totale" augmente, ce qui est associé avec une augmentation des performances mécaniques de la tige de renfort et une économie dans l'utilisation des matériaux.

Un autre aspect innovateur important de la présente méthode est le fait d'exposer le faisceau à une source d'énergie radiante, tel un chauffage diélectrique (ex. utiliser un chauffage par ondes radio, etc.), pour provoquer, par l'effet de l'augmentation de sa température, une baisse soudaine de la viscosité du polymère liquide thermodurcissable. Cette baisse de viscosité, permet à la résine, sous l'effet de compression des fils (ex. fils élastiques, et/ou autres composantes équivalentes) de migrer rapidement en surface et de former une couche d'épaisseur uniforme. Cette opération permet notamment d'obtenir plusieurs avantages, dont deux avantages considérables:

> 1) la couche de résine liquide sert d'adhésif pour la fixation des particules servant à la réalisation d'un ancrage mécanique au béton (voir étape suivante) - une étape d'enduction d'adhésif est donc évitée; et
> 2) la couche de résine forme une "barrière" qui protège les fibres contre les attaques chimiques et mécaniques de l'environnement, par exemple, l'attaque par les alcalis des fibres de verres, etc.

Un autre aspect innovateur important de la présente méthode consiste à projeter des particules sur le faisceau, comme par exemple, en soumettant la tige recouverte de la mince couche liquide à un saupoudrage de particules telles que du sable et/ou toute autre agrégat équivalent. La couche de résine agissant à titre d'adhésif, il se forme suite au durcissement de celle-ci une couche rugueuse sur la surface de la tige. Cette surface rugueuse sert à ancrer la tige dans le béton dans laquelle ladite tige va prendre place.

Un autre aspect innovateur important de la présente méthode est d'exposer le faisceau à un rayonnement pour amorcer en sa surface une polymérisation de la résine, comme, par exemple, en soumettre immédiatement la tige, suite à son ensablage, à une source de rayonnement lumineux possédant une longueur d'onde adéquate pour amorcer la réaction de l'additif photo-initiateur qui a été ajouté à la résine thermodurcissable, etc. C'est ce photo-initiateur qui assure, après son activation par une énergie lumineuse, une polymérisation très rapide de la résine, et autres avantages résultants.

Notamment, lors de cette étape de durcissement rapide, il se forme une "gaine rigide" autour du faisceau et, au minimum, trois conséquences avantageuses en résultent:

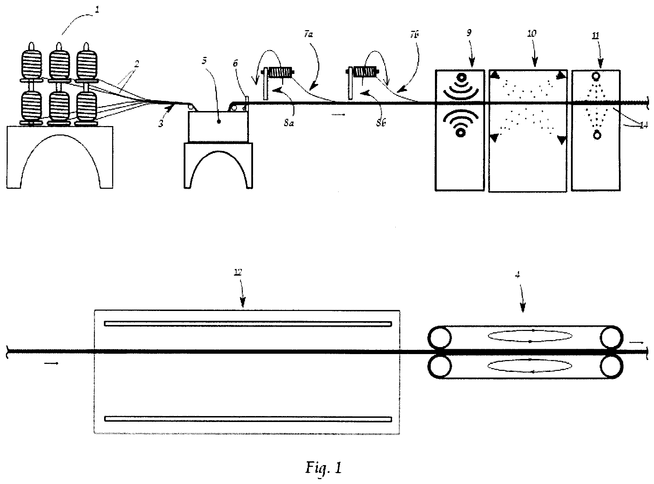

> 1) cela permet d'éviter une déformation par écoulement de la couche de liquide contenant du sable qui enveloppe la tige et ainsi obtenir une tige avec une bonne précision dimensionnelle;
> 2) cela permet, conséquemment à la présence de la gaine rigide ainsi formée d'avoir une tige rectiligne entre les points d'appuis nécessaires à la production de la tige. Ainsi la tige produite est rectiligne selon la présente méthode alors qu'elle est déformée selon un arc lorsque produite par des méthodes conventionnelles. En effet, dans un procédé traditionnel, les points d'appuis seraient illustrés par l'anneau d'essorage et un point d'appui en un endroit où la résine de la tige est devenue solide, par exemple, les éléments (6) et (2d) de la Fig. 1. Dans le procédé proposé, la gaine en plus d'assurer une rigidité précoce de la tige et ainsi de rapprocher le point d'appui initial (voir Figure 1, 12a), il est aussi possible d'en disposer plusieurs autres (voir Figure 1, 12a-12c) car la gaine est suffisamment solide pour ne pas se déformer sur ces points d'appuis; et
> 3) cela permet, en créant une "enveloppe" autour de la tige de limiter l'émission de vapeur de composé organique dans l'atmosphère et contribue ainsi à diminuer la pollution atmosphérique.

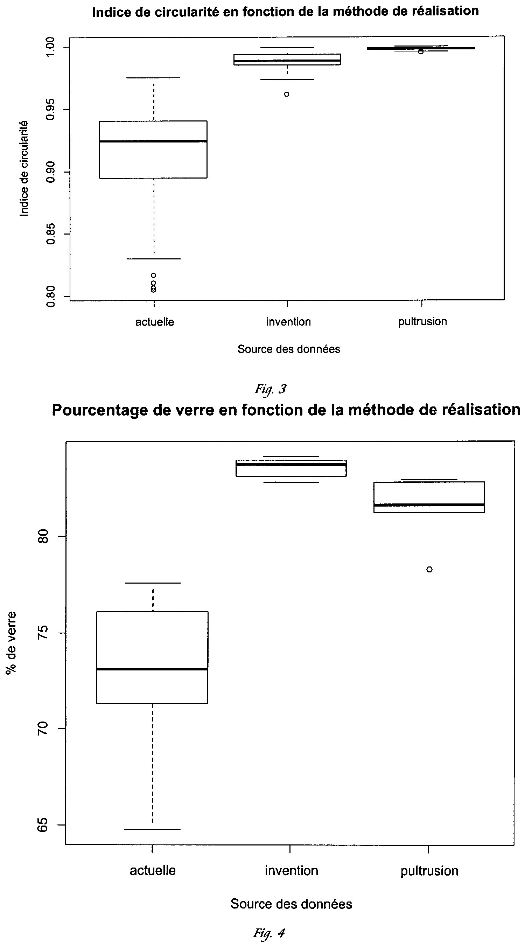

Le présent procédé est aussi économique, car le rapprochement des fibres (ex. de verre(s), etc.) sous l'effet de constriction des fils de la gaine permet d'obtenir des pourcentages de verre aussi élevés que ce qui peut être réalisé dans l'état actuel de l'art qu'avec des méthodes utilisant des filières (voir Figure 4). Pour atteindre les requis de résistance mécanique, la quantité de matériau est ainsi minimisée.

Le présent système est également avantageux car le débit de production est plus élevé qu'avec les méthodes conventionnelles utilisant des filières, car avec une filière suffisamment longue pour pourvoir transmettre une quantité de chaleur similaire au procédé proposé est associée une force de friction telle que sa mise en œuvre est impraticable.

De plus, la précision dimensionnelle de la tige obtenue par la présente invention se rapproche de celle obtenue à l'aide des procédés utilisant une filière et est très supérieure, à cause des déformations dues à l'écoulement de la résine à celles obtenues par les méthodes sans filière telles qu'elles existent.

Dans le cas où une tige produite par un procédé utilisant une filière, cela nécessite une surface modifiée, comme c'est toujours le cas pour des tiges de renfort pour le béton qui doivent pouvoir être ancrées dans le béton - il faut donc faire une étape supplémentaire pour y coller du sable, ou ce qui est plus économique, mais désastreux à la vue des propriétés mécaniques, produire des stries transversales à l'axe de la tige à l'aide de machines-outils.

De plus, la présente méthode est également avantageuse par rapport aux méthodes conventionnelles dans la mesure où la polymérisation de la couche de résine à l'aide du rayonnement lumineux, permet de créer une "enveloppe" autour de la tige. Cette enveloppe limite fortement l'émission de matériaux organiques volatils lors du passage dans le four.

Les avantages sont apportés par le pourcentage de la proportion de verre plus élevé, et par le gain de précision géométrique de la barre d'armature. La précision des barres d'armature permet d'utiliser sur celles-ci des fixations qui peuvent s'y glisser, s'insérer et être collées de manière solide et fiable.

L'augmentation de la proportion de verre permet aussi d'obtenir des barres d'armature, qui pour une résistance mécanique spécifiée, nécessitent moins de résines et sont donc plus économes.

En résumé, le produit résultant est une tige d'armature ayant une excellente résistance mécanique, une précision géométrique (ex. circularité, etc.) élevée et qui est réalisée à l'aide d'un procédé à débit élevé, qui ne nécessite pas d'onéreuses filières et qui génère un minimum de matériaux organiques volatils.

D'autres aspect(s), objet(s), mode(s) de réalisation, variante(s) et/ou avantage(s) de la présente invention selon les revendications sont brièvement décrits ci-dessous.

En effet, et selon un mode de réalisation particulier de la présente méthode, celle-ci vise également un procédé de pultrusion modifié pour produire une tige de section (ex. circulaire, etc.) de renfort pour béton comportant les étapes suivantes: a) imprégnation de filaments continue par une formulation de résine thermodurcissable; b) assembler les filaments en un faisceau; c) compresser les filaments du faisceau à l'aide d'un dispositif de constriction; d) gainer le faisceau saturé de résine à l'aide de fils élastiques enroulés sous tension autour du faisceau; e) exposer le faisceau résiné et gainé à une source d'énergie radiante capable de provoquer un chauffage diélectrique; f) exposer le faisceau résiné et gainé à des projections de particules destinées à fournir un ancrage de la tige dans le béton; g) exposer le faisceau résiné et gainé à une source en mesure d'initier une polymérisation sur la superficie du faisceau résiné; et h) exposer le faisceau à la chaleur d'un four de manière à apporter le supplément d'énergie thermique nécessaire à obtenir une polymérisation suffisante de la résine thermodurcissable.

Selon un autre aspect de la présente description, celle-ci vise également une formulation de résine thermodurcissable telle que la formulation soit constituée d'une résine thermodurcissable et optionnellement d'un photo-initiateur et optionnellement d'un additif en mesure de produire de la chaleur lorsqu'il est exposé à un champ d'onde radio.

Selon un autre aspect de la présente description, celle-ci vise également un filament ayant des fibres choisis parmi le groupe consisté de fibres de verres, fibres de céramique, fibres de basalte, fibres de carbone, fibres de métal et de polymères de type aramide ou polyester.

Selon un autre aspect de la présente description, celle-ci vise également une résine (ex. thermodurcissable, etc.) appartenant à la classe des résines acryliques, benzoxasine, ester de cyanate, vinylester, uréthane, époxy, phénolique, polybutadienne, polyimide, polyester, et polyuréthane, et/ou de manière générale de toute autre résine liquide pouvant être polymérisée.

La lecture des paragraphes suivants, associés aux dessins, permettra de mieux comprendre comment les différents avantages annoncés étants associés aux nouveautés techniques et différents aspects innovateurs de l'invention.

Notamment, selon des aspects préférentiels et/ou optionnels possibles, et en faisant aux figures ci-jointes, le fonctionnement de l'invention peut s'expliquer comme suit:

À partir d'un magasin de bobines (1), les filaments (2) sont dévidés desdites bobines et assemblés en un faisceau (3). Ces filaments sont souvent des fibres de verres mais peuvent aussi être de céramique, basalte, carbone ou même de métal (et/ou d'autre matériel approprié/possible).

Ce faisceau (3) est entraîné, par traction, exercé par le dispositif (4) dans un bac (5) qui contient un liquide de viscosité élevé dans lequel les filaments composant le faisceau passent. Le faisceau en devient donc, par absorption capillaire, saturé. Le liquide visqueux est souvent une résine thermodurcissable de type vinylester, mais peut aussi être une résine de polyester, époxy, polyuréthane, ou de type phénolique (et/ou autre nature appropriée/possible). La résine contenue dans le faisceau (3) est essorée en passant, toujours en étant tracté par le mécanisme (4) au travers d'un anneau ou plusieurs anneaux disposés séquentiellement (6) qui en diminuant le diamètre du faisceau en expurge la résine excédentaire.

Immédiatement, autour de ce faisceau (3), au moins deux fils élastiques (7a et 7b) sont enroulés sous tension. Ces fils proviennent des bobines (8a) et (8b) qui sont montées sur des bras rotatifs qui tournent autour d'un axe ayant le faisceau (3) pour centre de rotation. Lesdits fils élastiques sont enroulés en spirale autour de l'axe du faisceau (3), un des fils dans le sens dextre et l'autre dans le sens senestre. Le fil utilisé, normalement un mono filament de nylon de 60 deniers, peut être remplacé par tout fil constitué de matériaux pouvant, sous la tension, s'étirer élastiquement d'au moins environ 5 %, mais de préférence, d'au moins environ 15 %. Il est aussi possible de remplacer les fils par des rubans de type tissé ou de type non tissé sous condition qu'ils soient élastiques de manière similaire au fil décrit ci-dessus, de plus, dans le cas d'un ruban, il doit aussi être de nature poreuse pour que la résine puisse migrer en surface. En ajustant les dimensions des fils, leurs matériaux, la tension à l'enroulement, ainsi que le pas de la spirale d'enroulement, il est possible d'influencer les propriétés mécaniques de la tige résultante.

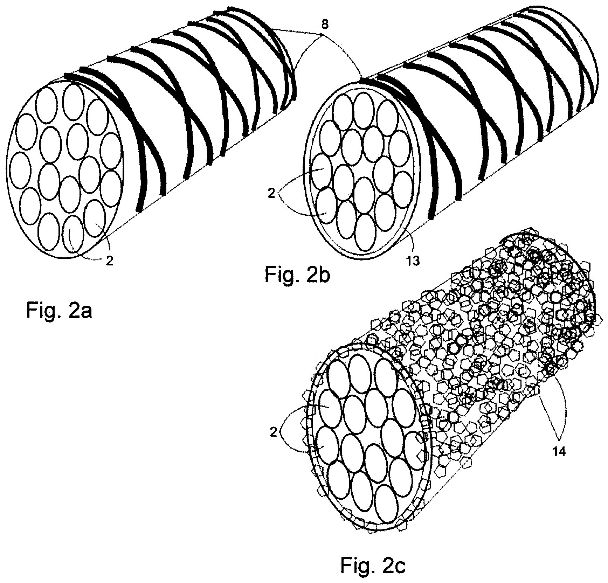

Le faisceau (3) résiné et gainé, toujours entraîné par la traction due au mécanisme (4) passe dans une enceinte de chauffage par ondes radio (9). La fréquence d'émission de ce dispositif peut être du domaine de la "haute fréquence" (1 à 400 MHZ) ou encore être dans la catégorie de "micro-ondes" (400 à 18 000 MHZ). Ce rayonnement d'ondes radio, produit une augmentation soudaine de la température de la résine. Cette augmentation de la température s'accompagne d'une chute tout aussi soudaine de la viscosité de la résine. Cette chute de la viscosité, sous l'effet de la constriction, apportée par les fils élastiques (7a et 7b) qui gainent le faisceau (3) fait en sorte que les fibres de verres se rapprochent et la résine qui occupait l'espace entre les fibres est chassée par la pression et se retrouve dans une mince couche (14) en surface dudit faisceau (voir Fig. 2a).

Immédiatement après l'exposition à la source d'ondes radio, le faisceau résiné, gainé et avec une mince couche de résine liquide en sa surface pénètre, toujours en étant tracté par le mécanisme (4) dans une enceinte d'ensablement (10) où du sable ou autres agrégats similaires sont projetés à sa surface par des jets d'air ou autres moyens. La résine ayant migré en surface de la tige se comporte comme un adhésif et les agrégats s'y collent (voir Fig. 2c). Les agrégats, souvent du sable, peuvent aussi être remplacés par du verre concassé, des particules de céramiques et/ou autres particules pouvant adhérer à la résine thermodurcissable sélectionnée.

Immédiatement, le faisceau résiné, gainé et avec une mince couche de résine liquide et contenant du sable en sa surface, toujours entraîné par traction due au mécanisme (4), passe dans une enceinte d'éclairage (11) où sont situées des lampes qui émettent une lumière ayant la longueur d'onde nécessaire à provoquer le déclenchement du photo-initiateur incorporé dans le mélange de résine thermodurcissable. Les lampes émettent normalement dans la zone de longueur d'onde de 200 à 500 nm et elles peuvent être de divers types tels que des diodes électroluminescentes, des lampes aux halogénures métalliques, lampes à vapeur de mercure, lampe au xénon ou arc électrique. Sous l'action de l'éclairage requis par la nature du photo-initiateur, la mince couche de liquide se polymérise rapidement ce qui entraîne une cessation de tout écoulement qui a pour conséquence de produire une tige de section presque parfaitement circulaire (voir Fig. 3). Cette polymérisation créée par ce moyen peut aussi être réalisée à l'aide de radiations ionisantes telles que celles provenant d'un accélérateur d'électrons ou d'une source radioactive de rayons gamma, tels que le cobalt 60, par exemple.

Cette enveloppe ou gaine est suffisamment solide pour que la tige puisse prendre appui sur le rouleau (12a) et *a fortiori* sur tous les autres points d'appuis optionnels subséquents . Cet appui permet d'éviter que le durcissement de la résine ne se produise dans une situation où la tige serait dans une forme courbée par son poids, comme c'est le cas des procédés conventionnels sans filière.

Le faisceau recouvert de sable est, toujours sous l'effet de la traction, entraîné dans un four où la température et le temps de séjour sont ajustés de manière à obtenir un degré de polymérisation suffisant. Le dispositif de traction (4) expulse une tige continue et rigide qui est ultérieurement découpée selon les besoins.

La méthode proposée permet de réaliser des tiges qui possèdent une précision géométrique élevée ainsi qu'un pourcentage de fibres élevé. Pour démontrer les avantages allégués, une série de tiges ayant des diamètres de 6, 10, 13, 16, 19 et 25 mm ont été réalisées à l'aide du procédé sans filière tel qu'actuellement utilisé dans l'industrie, des tiges de mêmes dimensions ont aussi été produites à l'aide du procédé décrit par la présente invention et à l'aide de la pultrusion avec filière. Ces tiges sont, dans les graphiques (voir Fig. 3 et voir Fig.4) respectivement identifiées par les étiquettes, "actuelle", "invention" et "pultrusion".

La Figure 3 montre la valeur de l'indice de circularité ainsi que la dispersion des valeurs mesurées pour les tiges réalisées à l'aide des trois procédés mentionnés ci-dessus.

L'indice de circularité Ic, a été établi en mesurant à l'aide d'un micromètre le diamètre de la tige le plus élevé et le plus faible. L'indice de circularité est défini comme suit:

$$Ic = 1 - \frac{(diamètre_{max} - diamètre_{min})}{diamètre_{moyen}} \text{ou}, \ diamètre_{moyen} = \frac{diamètre_{max} + diamètre_{min}}{2}$$

Lorsque Ic = 1, alors la section de la tige est parfaitement circulaire et lorsque que l'indice est Ic < 1, alors sa section est ovale.

La Figure 4 montre la proportion de fibres de verres pour les tiges réalisées selon les trois procédés mentionnés ci-dessus. Le pourcentage de fibre de verre s'obtient par une méthode gravimétrique qui compare la masse de la tige d'origine à la masse de fibre de verre qui reste après que la résine a été éliminée par une calcination dans un four à haute température.

Le pourcentage de fibre que contient une tige, dans le cas présent des fibres de verre est en relation avec la résistance mécanique de la tige. En effet, plus le pourcentage de fibre est élevé, plus la fibre est résistante car l'effet de la résine est négligeable. Il est aussi important de noter qu'une quantité faible de résine est associée à une utilisation économique des matériaux.

Les Figures 3 et 4 sont des graphiques de type "boîte de Tukey" qui permettent de voir rapidement la dispersion des données mesurées aux 25, 50 et 75 centiles des valeurs mesurées.

L'inspection visuelle du graphique de la Figure 3 permet de constater que la méthode proposée dans cette invention (identifiée par l'étiquette "invention") présente une valeur de circularité beaucoup plus grande que ce que permet l'art actuel (identifiée par l'étiquette "actuelle"). Cette valeur s'approche de ce qui peut être obtenu à l'aide de la méthode qui utilise une filière (identifiée par l'étiquette "pultrusion").

L'inspection du graphique de la Figure 4 montre les pourcentages de verre que donnent les tiges réalisées à l'aide des trois procédés décrits ci-dessus. Le pourcentage obtenu par les moyens de l'invention sont similaires à ce qui est obtenu à l'aide de la méthode de la pultrusion. Les mesures associées à la méthode "actuelle" montrent une valeur typique significativement plus faible et une variabilité élevée.

De plus, et contrairement aux méthodes conventionnelles qui utilisent des "gros" fils et des "basses" fréquences, la présente méthode permet avantageusement de s'approcher grandement d'une circularité de valeur de 1, grâce notamment au fait que des fils "fins" et "sous tension" sont utilisés, ainsi que des "hautes" fréquences. Combiné aux différents autres aspects innovateurs importants et différents selon les revendications, ceci permet d'avoir un produit résultant qui est une tige d'armature ayant une excellente résistance mécanique, une précision géométrique (ex. circularité, etc.) élevée et qui est réalisée à l'aide d'un procédé à débit élevé, qui ne nécessite pas d'onéreuses filières et qui génère un minimum de matériaux organiques volatils.

Bien que la présente invention ait été précédemment expliquée par le biais de réalisations préférentielles de celle-ci, il doit être précisé que toute modification à ces réalisations préférentielles n'est pas considérée changer ni altérer la nature et la portée de la présente selon les revendications.

## Revendications

1. Une méthode pour réaliser une barre d'armature par un procédé modifié de pultrusion, la méthode comprenant les étapes de:

   a) fournir une source de filaments (2);
   b) assembler des filaments (2) en un faisceau (3);
   c) imprégner le faisceau (3) d'une résine thermodurcissable;
   d) expurger de la résine excédentaire du faisceau (3);
   e) compresser le faisceau (3) de façon radiale;
   f) exposer le faisceau (3) à une source d'énergie radiante;
   g) projeter des particules sur le faisceau (3); et
   h) exposer le faisceau (3) à un rayonnement pour amorcer en sa surface une polymérisation de la résine; telle que les étapes a) à h) sont réalisées dans l'ordre, et donc, que l'étape c) d'imprégner le faisceau (3) d'une résine thermodurcissable est suivie par l'étape d) d'expurger de la résine excédentaire du faisceau (3), et que l'étape g) de projeter des particules sur le faisceau (3) est précédée par l'étape f) d'exposer le faisceau (3) à une source d'énergie radiante.

2. Une méthode pour réaliser une barre d'armature selon la revendication 1, dans laquelle l'étape a) comporte l'étape de fournir des bobines (1) de filaments (2), et de dévider lesdites bobines (1) afin de pouvoir effectuer l'étape b);

   dans laquelle les filaments (2) sont des filaments (2) de fibres continues; et/ou
   dans laquelle les filaments (2) sont des filaments (2) ayant des fibres choisis parmi le groupe consisté de fibres de verres, fibres de céramique, fibres de basalte, fibres de carbone, fibres de métal et de polymères de type aramide ou polyester.

3. Une méthode pour réaliser une barre d'armature selon la revendication 1 ou 2, dans laquelle l'étape b) comporte l'étape d'assembler des fibres continues afin de former le faisceau (3).

4. Une méthode pour réaliser une barre d'armature selon l'une quelconque des revendications 1-3, dans laquelle l'étape c) comporte l'étape d'entraîner le faisceau (3) par traction dans un bac (5) de résine;

   dans laquelle l'étape c) comporte l'étape de saturer le faisceau (3) de résine; et/ou
   dans laquelle l'étape c) comporte l'étape de saturer le faisceau (3) de résine par absorption capillaire.

5. Une méthode pour réaliser une barre d'armature selon l'une quelconque des revendications 1-4, dans laquelle l'étape d) comporte l'étape d'expurger de la résine excédentaire du faisceau (3) en passant le faisceau (3) dans au moins un anneau (6) constricteur; et/ou
   dans laquelle l'étape d) comporte l'étape d'expurger de la résine excédentaire du faisceau (3) en passant le faisceau (3) dans plusieurs anneaux (6) constricteurs différents, ces anneaux (6) étant disposés de façon séquentielle de façon à diminuer un diamètre du faisceau (3) en expurgeant de la résine excédentaire via chaque passage d'anneau (6) constricteur.

6. Une méthode pour réaliser une barre d'armature selon l'une quelconque des revendications 1-5, dans laquelle la méthode comporte au moins une des alternatives suivantes:

l'étape e) comporte l'étape de comprimer le faisceau (3) de façon centripète;
l'étape e) comporte l'étape de gainer le faisceau (3) avec au moins un fil sous tension;
l'étape e) comporte l'étape de gainer le faisceau (3) avec au moins une paire de fils (7a,7b) sous tension;
l'étape e) comporte l'étape de gainer le faisceau (3) de plusieurs fils (7a,7b) sous tension;
l'étape e) comporte l'étape de gainer le faisceau (3) avec au moins un fil élastique sous tension;
l'étape e) comporte l'étape de gainer le faisceau (3) avec au moins une paire de fils (7a,7b) élastiques sous tension;
l'étape e) comporte l'étape de gainer le faisceau (3) de plusieurs fils (7a,7b) élastiques sous tension;
les fils (7a,7b) proviennent de bobines (8a,8b) qui sont montées sur des bras rotatifs qui tournent autour d'un axe ayant le faisceau (3) pour centre de rotation; et
les fils (7a,7b) sont enroulés en spirale autour de l'axe du faisceau (3), avec au moins un des fils (7a,7b) dans un sens dextre et un autre des fils (7b,7a) dans un sens senestre.

7. Une méthode pour réaliser une barre d'armature selon la revendication 6, dans laquelle la méthode comporte au moins une des alternatives suivantes:

chaque fil utilisé est un mono-filament de nylon de 60 deniers;
chaque fil élastique comporte un profil de coupe donné, et est fait d'un matériau pouvant montrer une capacité à se déformer élastiquement d'une valeur approximative d'au moins 5 %;
chaque fil élastique comporte un profil de coupe donné, et est fait d'un matériau pouvant montrer une capacité à se déformer élastiquement d'une valeur approximative d'au moins 15 %; et
des fils (7a,7b) correspondent à des rubans de type tissé ou de type nontissé, et étant de nature poreuse pour que la résine puisse migrer en surface du faisceau (3).

8. Une méthode pour réaliser une barre d'armature selon l'une quelconque des revendications 1-7, dans laquelle dans laquelle l'étape c) comporte l'étape d'ajouter un additif calorifique à la résine thermodurcissable, l'additif calorifique étant capable de produire de la chaleur lorsque exposé à un champ d'ondes radio (9).

9. Une méthode pour réaliser une barre d'armature selon l'une quelconque des revendications 1-8, dans laquelle la méthode comporte au moins une des alternatives suivantes:

l'étape f) comporte l'étape d'exposer le faisceau (3) à un chauffage diélectrique;
l'étape f) comporte l'étape d'exposer le faisceau (3) à un champ d'ondes radio (9);
la fréquence des ondes radio (9) se situent entre environ 1 MHZ et environ 18 000 MHZ;
la fréquence des ondes radio (9) se situent entre environ 1 MHZ et environ 400 MHZ;
la fréquence des ondes radio (9) se situent entre environ 70 MHZ et environ 90 MHZ; et
la fréquence des ondes radio (9) se situent entre environ 400 MHZ et 18 000 MHZ.

10. Une méthode pour réaliser une barre d'armature selon l'une quelconque des revendications 1-9, dans laquelle l'étape g) comporte l'étape de soumettre le faisceau (3) à un saupoudrage de particules;

dans laquelle l'étape g) comporte l'étape de projeter des particules sur la surface du faisceau (3), les particules étant choisies parmi le groupe consisté de sable, agrégats, particules de verre concassé et particules de céramique;
dans laquelle les particules sont projetées par des jets d'air; et/ou
dans laquelle l'étape c) comporte l'étape d'ajouter un additif photo-initiateur à la résine thermodurcissable.

11. Une méthode pour réaliser une barre d'armature selon la revendication 10, dans laquelle l'étape h) comporte l'étape d'exposer le faisceau (3) à un rayonnement lumineux par l'entremise d'une source d'éclairage, le rayonnement lumineux possédant une longue d'onde donnée pour amorcer une réaction de l'additif photo-initiateur ayant été ajouté à la résine thermodurcissable;

dans laquelle la source d'éclairage comporte au moins une lampe émettant une lumière ayant une longueur d'onde nécessaire à provoquer un déclenchement de l'additif photo-initiateur ajouté dans la résine thermodurcissable;

dans laquelle ladite au moins une lampe émet dans une zone de longueur d'onde d'environ 200 nm à environ 500 nm;

dans laquelle ladite au moins une lampe est choisie parmi le groupe constitué de diode électroluminescente, lampe aux halogénures métalliques, lampe à vapeur de mercure, lampe au xénon et arc électrique;

dans laquelle l'étape h) comporte l'étape de réaliser la polymérisation de la résine en exposant le faisceau (3) à une radiation ionisante;

dans laquelle la radiation ionisante provient d'un accélérateur d'électrons ou d'une source radioactive de rayons gamma;

dans laquelle l'étape h) comporte l'étape de créer une enveloppe autour du faisceau (3);

dans laquelle l'étape h) comporte l'étape de terminer un apport d'énergie nécessaire à la polymérisation de la résine à l'aide d'un four (13) à convection, d'un four (13) radiant, d'un four (13) à air pulsé ou par chauffage diélectrique; et/ou

dans laquelle la résine thermodurcissable est une résine de type choisi parmi le groupe constitué de résine acrylique, benzoxasine, ester de cyanate, vinylester, uréthane, époxy, phénolique, polybutadienne, polyimide, polyester, et polyuréthane.

12. Un système pour réaliser une barre d'armature par un procédé modifié de pultrusion, le système comprenant:

un dispositif (1) pour fournir une source de filaments (2);

un dispositif pour assembler des filaments (2) en un faisceau (3);

un dispositif (5) pour imprégner le faisceau (3) d'une résine thermodurcissable;

un dispositif (6) pour expurger de la résine excédentaire du faisceau (3);

un dispositif (7a,7b,8a,8b) pour comprimer le faisceau (3) de façon radiale;

un dispositif (9) pour exposer le faisceau (3) à une source d'énergie radiante;

un dispositif (10) pour projeter des particules sur le faisceau (3); et

un dispositif (11) pour exposer le faisceau (3) à un rayonnement pour amorcer en sa surface une polymérisation de la résine;

les dispositifs susmentionnés étant disposés de telle façon que les étapes correspondantes à chaque dispositif sont réalisées dans l'ordre, et donc, que l'étape d'imprégner le faisceau (3) d'une résine thermodurcissable est suivie par l'étape d'expurger de la résine excédentaire du faisceau (3), et que l'étape de projeter des particules sur le faisceau (3) est précédée par l'étape d'exposer le faisceau (3) à une source d'énergie radiante.

13. Un système pour réaliser une barre d'armature selon la revendication 12, dans lequel le système comporte au moins une des alternatives suivantes:

le dispositif pour fournir une source de filaments (2) comporte des bobines (1) de filaments (2);

les filaments (2) sont des filaments (2) de fibres continues;

les filaments (2) sont des filaments (2) ayant des fibres choisis parmi le groupe consisté de fibres de verres, fibres de céramique, fibres de basalte, fibres de carbone, fibres de métal et de polymères de type aramide ou polyester;

le dispositif pour imprégner le faisceau (3) d'une résine thermodurcissable comporte un dispositif pour entraîner le faisceau (3) par traction dans un bac (5) de résine;

le dispositif pour expurger de la résine excédentaire du faisceau (3) comporte au moins un anneau (6) constricteur;

le dispositif pour expurger de la résine excédentaire du faisceau (3) comporte plusieurs anneaux (6) constricteurs différents, ces anneaux (6) étant disposés de façon séquentielle de façon à diminuer un diamètre du faisceau (3) en expurgeant de la résine excédentaire via chaque passage d'anneau (6) constricteur;

le dispositif pour comprimer le faisceau (3) comporte un dispositif pour gainer le faisceau (3) avec au moins un fil sous tension;

le dispositif pour comprimer le faisceau (3) comporte un dispositif pour gainer le faisceau (3) avec au moins une paire de fils (7a,7b) sous tension;

le dispositif pour comprimer le faisceau (3) comporte un dispositif pour gainer le faisceau (3) de plusieurs fils (7a,7b) sous tension;

le dispositif pour comprimer le faisceau (3) comporte un dispositif pour gainer le faisceau (3) avec au moins un fil élastique sous tension;

le dispositif pour comprimer le faisceau (3) comporte un dispositif pour gainer le faisceau (3) avec au moins une paire de fils (7a,7b) élastiques sous tension;

le dispositif pour comprimer le faisceau (3) de comporte un dispositif pour gainer le faisceau (3) de plusieurs fils (7a,7b) élastiques sous tension;

les fils (7a,7b) proviennent de bobines (8a,8b) qui sont montées sur des bras rotatifs qui tournent autour d'un axe ayant le faisceau (3) pour centre de rotation;

les fils (7a,7b) sont enroulés en spirale autour de l'axe du faisceau (3), avec au moins un des fils (7a,7b) dans un sens dextre et un autre des fils (7b,7a) dans un sens senestre;

chaque fil utilisé est un mono-filament de nylon de 60 deniers;

chaque fil élastique comporte un profil de coupe donné, et est fait d'un matériau pouvant montrer une capacité à se déformer élastiquement d'une valeur approximative d'au moins 5 %;

chaque fil élastique comporte un profil de coupe donné, et est fait d'un matériau pouvant montrer une capacité à se déformer élastiquement d'une valeur approximative d'au moins 15 %;

des fils (7a,7b) correspondent à des rubans de type tissé ou de type nontissé, et étant de nature poreuse pour que la résine puisse migrer en surface du faisceau (3);

la résine thermodurcissable contient un additif calorifique étant capable de produire de la chaleur lorsque exposé à un champ d'ondes radio (9);

le dispositif pour exposer le faisceau (3) à une source d'énergie radiante comporte un dispositif de chauffage diélectrique;

le dispositif pour exposer le faisceau (3) à une source d'énergie radiante comporte un champ d'ondes radio (9);

la fréquence des ondes radio (9) se situent entre environ 1 MHZ et environ 18 000 MHZ;

la fréquence des ondes radio (9) se situent entre environ 1 MHZ et environ 400 MHZ;

la fréquence des ondes radio (9) se situent entre environ 70 MHZ et environ 90 MHZ;

la fréquence des ondes radio (9) se situent entre environ 400 MHZ et 18 000 MHZ;

le dispositif pour projeter des particules sur une surface du faisceau (3) comporte un dispositif de saupoudrage de particules; le dispositif pour projeter des particules sur une surface du faisceau comporte des particules choisies parmi le groupe consisté de sable, agrégats, particules de verre concassé et particules de céramique;

les particules sont projetées par des jets d'air; le dispositif pour imprégner le faisceau d'une résine thermodurcissable comporte une résine thermodurcissable contenant un additif photo-initiateur;

le dispositif pour exposer le faisceau (3) à un rayonnement comporte une source d'éclairage procurant un rayonnement lumineux, le rayonnement lumineux possédant une longue d'onde donnée pour amorcer une réaction de l'additif photo-initiateur présent dans la résine thermodurcissable;

la source d'éclairage comporte au moins une lampe émettant une lumière ayant une longueur d'onde nécessaire à provoquer un déclenchement de l'additif photo-initiateur présent dans la résine thermodurcissable;

ladite au moins une lampe émet dans une zone de longueur d'onde d'environ 200 nm à environ 500 nm;

ladite au moins une lampe est choisie parmi le groupe constitué de diode électroluminescente, lampe aux halogénures métalliques, lampe à vapeur de mercure, lampe au xénon et arc électrique;

le dispositif pour exposer le faisceau (3) à un rayonnement comporte une source de radiation ionisante;

la radiation ionisante provient d'un accélérateur d'électrons ou d'une source radioactive de rayons gamma;

le système comporte en outre un apport d'énergie nécessaire à la polymérisation de la résine à l'aide d'un four (13) à convection, d'un four (13) radiant, d'un four (13) à air pulsé ou par chauffage diélectrique; et

la résine thermodurcissable est une résine de type choisi parmi le groupe constitué de résine acrylique, benzoxasine, ester de cyanate, vinylester, uréthane, époxy, phénolique, polybutadienne, polyimide, polyester, et polyuréthane.

**Patentansprüche**

1. Ein Verfahren zum Herstellen eines Bewehrungsstabs durch einen modifizierten Pultrusionsprozess, wobei das Verfahren die folgenden Schritte beinhaltet:

   a) Bereitstellen einer Quelle von Filamenten (2);
   b) Zusammenfügen der Filamente (2) zu einem Strang (3);
   c) Imprägnieren des Strangs (3) mit einem wärmehärtbaren Harz;
   d) Entfernen des überschüssigen Harzes von dem Strang (3);
   e) Komprimieren des Strangs (3) auf radiale Weise;
   f) Exponieren des Strangs (3) gegenüber einer Strahlungsenergiequelle;
   g) Sprühen von Teilchen auf den Strang (3); und
   h) Exponieren des Strangs (3) gegenüber einer Bestrahlung, um auf seiner Oberfläche eine Polymerisation des Harzes zu initiieren;

derart, dass die Schritte a) bis h) der Reihe nach durchgeführt werden und somit, dass Schritt c) des Imprägnierens des Strangs (3) mit einem wärmehärtbaren Harz von Schritt d) des Entfernens des überschüssigen Harzes von dem Strang (3) gefolgt wird, und dass Schritt g) des Sprühens von Teilchen auf den Strang (3) Schritt f) des Exponierens des Strangs (3) gegenüber einer Strahlungsenergiequelle vorausgeht.

2. Verfahren zum Herstellen eines Bewehrungsstabs gemäß Anspruch 1, wobei Schritt a) den Schritt des Bereitstellens von Spulen (1) von Filamenten (2) und das Abwickeln der Spulen (1) umfasst, um Schritt b) ausführen zu können; wobei die Filamente (2) Filamente (2) aus Endlosfasern sind; und/oder wobei die Filamente (2) Filamente (2) sind, die Fasern aufweisen, ausgewählt aus der Gruppe, bestehend aus Glasfasern, Keramikfasern, Basaltfasern, Kohlenstofffasern, Metallfasern und Polymeren vom Aramid- oder Polyestertyp.

3. Verfahren zum Herstellen eines Bewehrungsstabs gemäß Anspruch 1 oder 2, wobei Schritt b) den Schritt des Zusammenfügens der Endlosfasern umfasst, um den Strang (3) zu bilden.

4. Verfahren zum Herstellen eines Bewehrungsstabs gemäß einem der Ansprüche 1-3, wobei Schritt c) den Schritt des Hineinziehens des Strangs (3) in eine Wanne (5) mit Harz durch Zugbeanspruchung umfasst; wobei Schritt c) den Schritt des Sättigens des Strangs (3) mit Harz umfasst; und/oder wobei Schritt c) den Schritt des Sättigens des Strangs (3) mit Harz durch Kapillarabsorption umfasst.

5. Verfahren zum Herstellen eines Bewehrungsstabs gemäß einem der Ansprüche 1-4, wobei Schritt d) den Schritt des Entfernens des überschüssigen Harzes von dem Strang (3) umfasst, indem der Strang (3) durch mindestens einen Konstriktionsring (6) geführt wird; und/oder wobei Schritt d) den Schritt des Entfernens des überschüssigen Harzes von dem Strang (3) umfasst, indem der Strang (3) durch mehrere unterschiedliche Konstriktionsringe (6) geführt wird, wobei diese Ringe (6) nacheinander angeordnet sind, sodass ein Durchmesser des Strangs (3) verkleinert wird, indem das überschüssige Harz mittels jeder Konstriktionsring(6)-Durchführung entfernt wird.

6. Verfahren zum Herstellen eines Bewehrungsstabs gemäß einem der Ansprüche 1-5, wobei das Verfahren mindestens eine der folgenden Alternativen umfasst:

Schritt e) umfasst den Schritt des Komprimierens des Strangs (3) auf zentripetale Weise;
Schritt e) umfasst den Schritt des Ummantelns des Strangs (3) mit mindestens einem Faden unter Zugspannung;
Schritt e) umfasst den Schritt des Ummantelns des Strangs (3) mit mindestens einem Paar von Fäden (7a, 7b) unter Zugspannung;
Schritt e) umfasst den Schritt des Ummantelns des Strangs (3) mit mehreren Fäden (7a, 7b) unter Zugspannung;
Schritt e) umfasst den Schritt des Ummantelns des Strangs (3) mit mindestens einem elastischen Faden unter Zugspannung;
Schritt e) umfasst den Schritt des Ummantelns des Strangs (3) mit mindestens einem Paar von elastischen Fäden (7a, 7b) unter Zugspannung;
Schritt e) umfasst den Schritt des Ummantelns des Strangs (3) mit mehreren elastischen Fäden (7a, 7b) unter Zugspannung;
wobei die Fäden (7a, 7b) von Spulen (8a, 8b) stammen, die auf Rotationsarmen montiert sind, die sich um eine Achse drehen, die den Strang (3) als Rotationsmittelpunkt aufweist; und
wobei die Fäden (7a, 7b) um die Achse des Strangs (3) herum spiralförmig gewickelt sind, wobei mindestens einer der Fäden (7a, 7b) in einer rechtsdrehenden Richtung und ein anderer der Fäden (7b, 7a) in einer linksdrehenden Richtung verläuft.

7. Verfahren zum Herstellen eines Bewehrungsstabs gemäß Anspruch 6, wobei das Verfahren mindestens eine der folgenden Alternativen umfasst:

jeder verwendete Faden ist ein 60-Denier-Nylon-Monofilament;
jeder elastische Faden umfasst ein gegebenes Schnittprofil und besteht aus einem Material, das in der Lage ist, sich um einen ungefähren Wert von mindestens 5 % elastisch zu verformen;
jeder elastische Faden umfasst ein gegebenes Schnittprofil und besteht aus einem Material, das in der Lage ist, sich um einen ungefähren Wert von mindestens 15 % elastisch zu verformen; und
die Fäden (7a, 7b) entsprechen Bändern des gewebten Typs oder des nicht-gewebten Typs und sind von poröser Art, damit das Harz an die Oberfläche des Strangs (3) migrieren kann.

8. Verfahren zum Herstellen eines Bewehrungsstabs gemäß einem der Ansprüche 1-7, wobei Schritt c) den Schritt des Hinzufügens eines wärmeerzeugenden Additivs zu dem wärmehärtbaren Harz umfasst, wobei das wärmeerzeugende Additiv Wärme produzieren kann, wenn es gegenüber einem Feld von Radiowellen (9) exponiert wird.

9. Verfahren zum Herstellen eines Bewehrungsstabs gemäß einem der Ansprüche 1-8, wobei das Verfahren mindestens eine der folgenden Alternativen umfasst:

Schritt f) umfasst den Schritt des Exponierens des Strangs (3) gegenüber einer dielektrischen Erwärmung; Schritt f) umfasst den Schritt des Exponierens des Strangs (3) gegenüber einem Feld von Radiowellen (9); wobei die Frequenz der Radiowellen (9) zwischen etwa 1 MHz und etwa 18 000 MHz liegt; wobei die Frequenz der Radiowellen (9) zwischen etwa 1 MHz und etwa 400 MHz liegt; wobei die Frequenz der Radiowellen (9) zwischen etwa 70 MHz und etwa 90 MHz liegt; und wobei die Frequenz der Radiowellen (9) zwischen etwa 400 MHz und 18 000 MHz liegt.

10. Verfahren zum Herstellen eines Bewehrungsstabs gemäß einem der Ansprüche 1-9, wobei Schritt g) den Schritt des Unterziehens des Strangs (3) einer Bestäubung mit Teilchen umfasst; wobei Schritt g) den Schritt des Sprühens von Teilchen auf die Oberfläche des Strangs (3) umfasst, wobei die Teilchen ausgewählt sind aus der Gruppe, bestehend aus Sand, Aggregaten, Teilchen aus gebrochenem Glas und Keramikteilchen; wobei die Teilchen durch Luftstrahlen gesprüht werden; und/oder wobei der Schritt c) den Schritt des Hinzufügens eines Photoinitiator-Additivs zu dem wärmehärtbaren Harz umfasst.

11. Verfahren zum Herstellen eines Bewehrungsstabs gemäß Anspruch 10, wobei Schritt h) den Schritt des Exponierens des Strangs (3) gegenüber einer Bestrahlung mit Licht unter Einschaltung einer Lichtquelle umfasst, wobei die Bestrahlung mit Licht eine gegebene Wellenlänge besitzt, um eine Reaktion des Photoinitiator-Additivs, das dem wärmehärtbaren Harz hinzugefügt wurde, zu initiieren;

wobei die Lichtquelle mindestens eine Lampe umfasst, die ein Licht emittiert, das eine Wellenlänge aufweist, die notwendig ist, um eine Aktivierung des dem wärmehärtbaren Harz hinzugefügten Photoinitiator-Additivs zu bewirken; wobei die mindestens eine Lampe in einem Wellenlängenbereich von etwa 200 nm bis etwa 500 nm emittiert; wobei die mindestens eine Lampe ausgewählt ist aus der Gruppe, bestehend aus Leuchtdiode, Halogenmetalldampflampe, Quecksilberdampflampe, Xenonlampe und Lichtbogen; wobei Schritt h) den Schritt des Durchführens der Polymerisation des Harzes umfasst, indem der Strang (3) gegenüber einer ionisierenden Strahlung exponiert wird; wobei die ionisierende Strahlung von einem Elektronenbeschleuniger oder einer radioaktiven Quelle von Gammastrahlen stammt; wobei Schritt h) den Schritt des Erzeugens einer Hülle um den Strang (3) herum umfasst; wobei Schritt h) den Schritt des Beendens einer Energiezufuhr, die für die Polymerisation des Harzes notwendig ist, mithilfe eines Konvektionsofens (13), eines strahlenden Ofens (13), eines Gebläseluftofens (13) oder durch dielektrische Erwärmung umfasst; und/oder wobei das wärmehärtbare Harz ein Harz des Typs ist, ausgewählt aus der Gruppe, bestehend aus Acryl-, Benzoxazin-, Cyanatester-, Vinylester-, Urethan-, Epoxid-, Phenol-, Polyisobutadien-, Polyimid-, Polyester- und Polyurethanharz.

12. Ein System zum Herstellen eines Bewehrungsstabs durch einen modifizierten Pultrusionsprozess, wobei das System beinhaltet:

eine Vorrichtung (1) zum Bereitstellen einer Quelle von Filamenten (2); eine Vorrichtung zum Zusammenfügen der Filamente (2) zu einem Strang (3); eine Vorrichtung (5) zum Imprägnieren des Strangs (3) mit einem wärmehärtbaren Harz; eine Vorrichtung (6) zum Entfernen des überschüssigen Harzes von dem Strang (3); eine Vorrichtung (7a, 7b, 8a, 8b) zum Komprimieren des Strangs (3) auf radiale Weise; eine Vorrichtung (9) zum Exponieren des Strangs (3) gegenüber einer Strahlungsenergiequelle; eine Vorrichtung (10) zum Sprühen von Teilchen auf den Strang (3); und eine Vorrichtung (11) zum Exponieren des Strangs (3) gegenüber einer Bestrahlung zum Initiieren einer Polymerisation des Harzes auf seiner Oberfläche;

wobei die vorgenannten Vorrichtungen derart angeordnet sind, dass die jeder Vorrichtung entsprechenden Schritte der Reihe nach durchgeführt werden und daher der Schritt des Imprägnierens des Strangs (3) mit einem wärmehärtbaren Harz von dem Schritt des Entfernens des überschüssigen Harzes von dem Strang (3) gefolgt wird, und der Schritt des Sprühens von Teilchen auf den Strang (3) dem Schritt des Exponierens des Strangs (3) gegenüber einer Strahlungsenergiequelle vorausgeht.

13. System zum Herstellen eines Bewehrungsstabs gemäß Anspruch 12, wobei das System mindestens eine der folgenden Alternativen umfasst:

die Vorrichtung zum Bereitstellen einer Quelle von Filamenten (2) umfasst Spulen (1) von Filamenten (2);

die Filamente (2) sind Filamente (2) aus Endlosfasern;

die Filamente (2) sind Filamente (2), die Fasern aufweisen, ausgewählt aus der Gruppe, bestehend aus Glasfasern, Keramikfasern, Basaltfasern, Kohlenstofffasern, Metallfasern und Polymeren vom Aramid- oder Polyestertyp;

die Vorrichtung zum Imprägnieren des Strangs (3) mit einem wärmehärtbaren Harz umfasst eine Vorrichtung zum Hineinziehen des Strangs (3) in eine Wanne (5) mit Harz durch Zugbeanspruchung;

die Vorrichtung zum Entfernen des überschüssigen Harzes von dem Strang (3) umfasst mindestens einen Konstriktionsring (6);

die Vorrichtung zum Entfernen des überschüssigen Harzes von dem Strang (3) umfasst mehrere unterschiedliche Konstriktionsringe (6), wobei diese Ringe (6) nacheinander angeordnet sind, sodass ein Durchmesser des Strangs (3) verkleinert wird, indem das überschüssige Harz mittels jeder Konstriktionsring(6)-Durchführung entfernt wird;

die Vorrichtung zum Komprimieren des Strangs (3) umfasst eine Vorrichtung zum Ummanteln des Strangs (3) mit mindestens einem Faden unter Zugspannung;

die Vorrichtung zum Komprimieren des Strangs (3) umfasst eine Vorrichtung zum Ummanteln des Strangs (3) mit mindestens einem Paar von Fäden (7a, 7b) unter Zugspannung;

die Vorrichtung zum Komprimieren des Strangs (3) umfasst eine Vorrichtung zum Ummanteln des Strangs (3) mit mehreren Fäden (7a, 7b) unter Zugspannung;

die Vorrichtung zum Komprimieren des Strangs (3) umfasst eine Vorrichtung zum Ummanteln des Strangs (3) mit mindestens einem elastischen Faden unter Zugspannung;

die Vorrichtung zum Komprimieren des Strangs (3) umfasst eine Vorrichtung zum Ummanteln des Strangs (3) mit mindestens einem Paar von elastischen Fäden (7a, 7b) unter Zugspannung;

die Vorrichtung zum Komprimieren des Strangs (3) umfasst eine Vorrichtung zum Ummanteln des Strangs (3) mit mehreren elastischen Fäden (7a, 7b) unter Zugspannung;

wobei die Fäden (7a, 7b) von Spulen (8a, 8b) stammen, die auf Rotationsarmen montiert sind, die sich um eine Achse drehen, die den Strang (3) als Rotationsmittelpunkt aufweist;

die Fäden (7a, 7b) sind um die Achse des Strangs (3) herum spiralförmig gewickelt, wobei mindestens einer der Fäden (7a, 7b) in einer rechtsdrehenden Richtung und ein anderer der Fäden (7b, 7a) in einer linksdrehenden Richtung verläuft;

jeder verwendete Faden ist ein 60 Denier-Nylon-Monofilament;

jeder elastische Faden umfasst ein gegebenes Schnittprofil und besteht aus einem Material, das in der Lage ist, sich um einen ungefähren Wert von mindestens 5 % elastisch zu verformen;

jeder elastische Faden umfasst ein gegebenes Schnittprofil und besteht aus einem Material, das in der Lage ist, sich um einen ungefähren Wert von mindestens 15 % elastisch zu verformen;

die Fäden (7a, 7b) entsprechen Bändern des gewebten Typs oder des nicht-gewebten Typs und sind von poröser Art, damit das Harz an die Oberfläche des Strangs (3) migrieren kann;

das wärmehärtbare Harz enthält ein wärmeerzeugendes Additiv, das Wärme produzieren kann, wenn gegenüber einem Feld von Radiowellen (9) exponiert;

die Vorrichtung zum Exponieren des Strangs (3) gegenüber einer Strahlungsenergiequelle umfasst eine Vorrichtung zur dielektrischen Erwärmung;

die Vorrichtung zum Exponieren des Strangs (3) gegenüber einer Strahlungsenergiequelle umfasst ein Feld von Radiowellen (9);

wobei die Frequenz der Radiowellen (9) zwischen etwa 1 MHz und etwa 18 000 MHz liegt;

wobei die Frequenz der Radiowellen (9) zwischen etwa 1 MHz und etwa 400 MHz liegt;

wobei die Frequenz der Radiowellen (9) zwischen etwa 70 MHz und etwa 90 MHz liegt;

wobei die Frequenz der Radiowellen (9) zwischen etwa 400 MHz und 18 000 MHz liegt;

die Vorrichtung zum Sprühen von Teilchen auf eine Oberfläche des Strangs (3) umfasst eine Vorrichtung zur Bestäubung mit Teilchen;

die Vorrichtung zum Sprühen von Teilchen auf eine Oberfläche des Strangs umfasst Teilchen, ausgewählt aus der Gruppe, bestehend aus Sand, Aggregaten, Teilchen aus gebrochenem Glas und Keramikteilchen;

die Teilchen werden durch Luftstrahlen gesprüht; und/oder

die Vorrichtung zum Imprägnieren des Strangs eines wärmehärtbaren Harzes umfasst ein wärmehärtbares Harz, das ein Photoinitiator-Additiv enthält;

die Vorrichtung zum Exponieren des Strangs (3) gegenüber einer Bestrahlung umfasst eine Lichtquelle, die eine Bestrahlung mit Licht liefert, wobei die Bestrahlung mit Licht eine gegebene Wellenlänge zum Initiieren einer Reaktion des Photoinitiator-Additivs, das in dem wärmehärtbaren Harz vorhanden ist, besitzt;

die Lichtquelle umfasst mindestens eine Lampe, die ein Licht emittiert, das eine Wellenlänge aufweist, die notwendig ist, um eine Aktivierung des in dem wärmehärtbaren Harz vorhandenen Photoinitiator-Additivs zu bewirken;

wobei die mindestens eine Lampe in einem Wellenlängenbereich von etwa 200 nm bis etwa 500 nm emittiert;

wobei die mindestens eine Lampe ausgewählt ist aus der Gruppe, bestehend aus Leuchtdiode, Halogenmetalldampflampe, Quecksilberdampflampe, Xenonlampe und Lichtbogen;

die Vorrichtung zum Exponieren des Strangs (3) gegenüber einer Bestrahlung umfasst eine Quelle ionisierender Strahlung;

die ionisierende Strahlung stammt aus einem Elektronenbeschleuniger oder einer radioaktiven Quelle von Gammastrahlen;

das System umfasst des Weiteren eine Energiezufuhr, die für die Polymerisation des Harzes notwendig ist, mithilfe eines Konvektionsofens (13), eines strahlenden Ofens (13), eines Gebläseluftofens (13) oder durch dielektrische Erwärmung; und

das wärmehärtbare Harz ist ein Harz des Typs, ausgewählt aus der Gruppe, bestehend aus Acryl-, Benzoxazin-, Cyanatester-, Vinylester-, Urethan-, Epoxid-, Phenol-, Polyisobutadien-, Polyimid-, Polyester- und Polyurethanharz.

## Claims

1. A method for producing a reinforcement bar by a modified process of pultrusion, the method comprising the steps of:

   a) providing a source of filaments (2);
   b) assembling filaments (2) into a bundle (3);
   c) impregnating the bundle (3) with a thermosetting resin;
   d) removing excess resin from the bundle (3);
   e) compressing the bundle (3) in a radial manner;
   f) exposing the bundle (3) to a source of radiant energy;
   g) projecting particles onto the bundle (3); and
   h) exposing the bundle (3) to a radiation in order to initiate on its surface a polymerization of the resin;

   such that steps a) to h) are carried out in order, and thus, step c) of impregnating the bundle (3) with a thermosetting resin is followed by step d) of removing excess resin from the bundle (3), and step g) of projecting particles onto the bundle (3) is preceded by step f) of exposing the bundle (3) to a source of radiant energy.

2. A method for producing a reinforcement bar according to claim 1, wherein step a) includes the step of providing spools (1) of filaments (2), and unwiding said spools (1) in order to be able to carry out step b);

   wherein the filaments (2) are filaments (2) of continuous fibers; and/or
   wherein the filaments (2) are filaments (2) having fibers selected from the group consisting of glass fibers, ceramic fibers, basalt fibers, carbon fibers, fibers of metal and of polymers of aramid type or polyester.

3. A method for producing a reinforcement bar according to claim 1 or 2, wherein step b) includes the step of assembling continuous fibers in order to form the bundle (3).

4. A method for producing a reinforcement bar according to any one of claims 1-3, wherein step c) includes the step of pulling the bundle (3) by traction into a resin bin (5);

   wherein step c) includes the step of saturating the bundle (3) with resin; and/or
   wherein step c) includes the step of saturating the bundle (3) of resin by capillary absorption.

5. A method for producing a reinforcement bar according to any one of claims 1-4, wherein step d) includes the step of removing excess resin from the bundle (3) by passing the bundle (3) through at least one constrictor ring (6); and/or wherein step d) includes the step of removing excess resin from the bundle (3) by passing the bundle (3) through several different constrictor rings (6), these rings (6) being disposed in a sequential manner so as to decrease a diameter of the bundle (3) by removing excess resin via each passage of constrictor ring (6).

6. A method for producing a reinforcement bar according to any one of claims 1-5, wherein the method includes at least one of the following alternatives:

    step e) includes the step of compressing the bundle (3) in a centripetal manner;
    step e) includes the step of sheathing the bundle (3) with at least one thread under tension;
    step e) includes the step of sheathing the bundle (3) with at least one pair of threads (7a,7b) under tension;
    step e) includes the step of sheathing the bundle (3) with several threads (7a,7b) under tension;
    step e) includes the step of sheathing the bundle (3) with at least one elastic thread under tension;
    step e) includes the step of sheathing the bundle (3) with at least one pair of elastic threads (7a,7b) under tension;
    step e) includes the step of sheathing the bundle (3) with several elastic threads (7a,7b) under tension;
    the threads (7a,7b) come from spools (8a,8b) that are mounted on rotating arms that turn around an axis having the bundle (3) as a center of rotation; and
    the threads (7a,7b) are wound in a spiral about the axis of the bundle (3), with at least one of the threads (7a,7b) in a dextral direction and another one of the threads (7b,7a) in a senestral direction.

7. A method for producing a reinforcement bar according to claim 6, wherein the method includes at least one of the following alternatives:

    each thread used is a monofilament of nylon of last 60;
    each elastic thread includes a given cross-sectional profile, and is made with a material capable of deforming itself elastically by an approximate value of at least 5 %;
    each elastic thread includes a given cross-sectional profile, and is made of a material capable of deforming itself elastically by an approximate value of at least 15%; and
    threads (7a,7b) correspond to bands of woven type or non-woven type, and being of porous nature so that the resin may migrate to the surface of the bundle (3).

8. A method for producing a reinforcement bar according to any one of claims 1-7, wherein step c) includes the step of adding a calorific additive to the thermosetting resin, the calorific additive being capable of producing heat when exposed to a field of radio waves (9).

9. A method for producing a reinforcement bar according to any one of claims 1-8, wherein the method includes at least one of the following alternatives:

    step f) includes the step of exposing the bundle (3) to a dielectric heating;
    step f) comprises the step of exposing the bundle (3) to a field of radio waves (9); the frequency of the radio waves (9) is located between about 1 MHZ and about 18 000 MHZ;
    the frequency of the radio waves (9) is located between about 1 MHZ and about 40 000 MHZ;
    the frequency of the radio waves (9) is located between about 70 MHZ and about 90 MHZ; and
    the frequency of the radio waves (9) is located between about 400 MHZ and 18 000 MHZ.

10. A method for producing a reinforcement bar according to any one of claims 1-9, wherein step g) includes the step of exposing the bundle (3) to a sprinkling of particles;

    wherein step g) includes the step of projecting particles onto the surface of the bundle (3), the particles being selected among the group consisting of sand, aggregates, particles of crushed glass and particles of ceramic;
    wherein the particles are projected by jets of air; and/or
    wherein step c) includes the step of adding a photo-initiator additive to the thermosetting resin.

11. A method for producing a reinforcement bar according to claim 10, wherein step h) includes the step of exposing the bundle (3) to a luminous radiation by means of a source of lighting, the luminous radiation having a given wavelength for triggering a reaction of the photo-initiator additive having been added to the thermosetting resin;

wherein the source of lighting comprises at least one lamp emitting a light having a wavelength necessary to provoke a triggering of the photo-initiator additive added into the thermosetting resin;

wherein said at least one lamp emits in a wavelength zone of about 200 nm to about 500 nm;

wherein said at least one lamp is selected from the group consisting of electroluminescent diode, metal halide lamp, mercury vapor lamp, xenon lamp and electric arc;

wherein step h) includes the step of carrying out the polymerization of the resin by exposing the bundle (3) to an ionization radiation;

wherein the ionization radiation comes from an electron accelerator or from a radioactive source of gamma rays;

wherein step h) includes the step of creating an envelope about the bundle (3);

wherein step h) includes the step of finishing an input of energy necessary to the polymerization of the resin with the aid of a convection oven (13), of a radiant oven (13), of an oven (13) with pulsed air or by dielectric heating; and/or

wherein the thermosetting resin is a resin selected from the group consisting of acrylic resin, benzoxazine, cyanate ester, vinyl ester, urethane, epoxy, phenolic, polybutadiene, polyimide, polyester, and polyurethane.

12. A system for producing a reinforcement bar by a modified process of pultrusion, the system comprising:

a device (1) for providing a source of filaments (2);
a device for assembling filaments (2) into a bundle (3);
a device (5) for impregnating the bundle (3) with a thermosetting resin;
a device (6) for removing excess resin from the bundle (3);
a device (7a,7b,8a,8b) for compressing the bundle (3) in a radial manner;
a device (9) for exposing the bundle (3) to a source of radiant energy;
a device (10) for projecting particles onto the bundle (3); and
a device (11) for exposing the bundle (3) to a radiation in order to initiate on its surface a polymerization of the resin;

the aforementioned devices being disposed in such a way that the steps corresponding to each device are carried out in order, and thus, the step of impregnating the bundle (3) with a thermosetting resin is followed by the step of removing excess resin from the bundle (3), and the step of projecting particles onto the bundle (3) is preceded by the step of exposing the bundle (3) to a source of radiant energy.

13. A system for producing a reinforcement bar according to claim 12, wherein the system includes at least one of the following alternatives:

the device for providing a source of filaments (2) incudes spools (1) of filaments (2);
the filaments (2) are filaments (2) of continuous fibers;
wherein the filaments (2) are filaments (2) having fibers selected from the group consisting of glass fibers, ceramic fibers, basalt fibers, carbon fibers, fibers of metal and of polymers of aramid type or polyester;
the device for impregnating the bundle (3) with a thermosetting resin includes a device for pulling the bundle (3) by traction into a resin bin (5);
the device for removing excess resin from the bundle (3) includes at least one constrictor ring (6);
the device for removing excess resin from the bundle (3) includes several different constrictor rings (6), these rings (6) being disposed in a sequential manner so as to decrease a diameter of the bundle (3) by removing excess resin via each passage of constrictor ring (6);
the device for compressing the bundle (3) includes a device for sheathing the bundle (3) with at least one thread under tension;
the device for compressing the bundle (3) includes a device for sheathing the bundle (3) with at least one pair of threads (7a,7b) under tension;
the device for compressing the bundle (3) includes a device for sheathing the bundle (3) with at least one pair of threads (7a,7b) under tension;
the device for compressing the bundle (3) includes a device for sheathing the bundle (3) with several threads (7a,7b) under tension;
the device for compressing the bundle (3) includes a device for sheathing the bundle (3) with at least one pair of elastic threads (7a,7b) under tension;
the device for compressing the bundle (3) includes a device for sheathing the bundle (3) with several elastic threads (7a,7b) under tension;
the threads (7a,7b) come from spools (8a,8b) that are mounted on rotating arms that turn around an axis having the bundle (3) as a center of rotation;

the threads (7a,7b) are wound in a spiral about the axis of the bundle (3), with at least one of the threads (7a,7b) in a dextral direction and another one of the threads (7b,7a) in a senestral direction;

each thread used is a monofilament of nylon of last 60;

each elastic thread includes a given cross-sectional profile, and is made with a material capable of deforming itself elastically by an approximate value of at least 5 %;

each elastic thread includes a given cross-sectional profile, and is made with a material capable of deforming itself elastically by an approximate value of at least 15 %;

threads (7a,7b) correspond to bands of woven type or non-woven type, and being of porous nature so that the resin may migrate to the surface of the bundle (3);

the thermosetting resin contains a calorific additive being capable of producing heat when exposed to a field of radio waves (9);

the device for exposing the bundle (3) to a source of radiant energy includes a device for dielectric heating;

the device for exposing the bundle (3) to a source of radiant energy includes a field of radio waves (9);

the frequency of the radio waves (9) is located between about 1 MHZ and about 18 000 MHZ;

the frequency of the radio waves (9) is located between about 1 MHZ and about 40 000 MHZ;

the frequency of the radio waves (9) is located between about 70 MHZ and about 90 MHZ;

the frequency of the radio waves (9) is located between about 400 MHZ and 18 000 MHZ;

the device for projecting particles onto the bundle (3) includes a device for sprinkling particles;

the device for projecting particles on a surface of the bundle (3) includes particles selected among the group consisting of sand, aggregates, particles of crushed glass and particles of ceramic;

the particles are projected by jets of air;

the device for impregnating the bundle (3) with a thermosetting resin includes a thermosetting resin containing a photo-initiator additive;

the device for exposing the bundle (3) to a radiation includes a source of lighting for providing a luminous radiation, the luminous radiation having a given wavelength for triggering a reaction of the photo-initiator additive present in the thermosetting resin;

the source of lighting comprises at least one lamp emitting a light having a wavelength necessary to provoke a triggering of the photo-initiator additive present in the thermosetting resin;

said at least one lamp emits in a wavelength zone of about 200 nm to about 500 nm;

said at least one lamp is selected from the group consisting of electroluminescent diode, metal halide lamp, mercury vapor lamp, xenon lamp and electric arc;

the device for exposing the bundle (3) to a radiation includes a source of ionization radiation;

the ionization radiation comes from an electron accelerator or from a radioactive source of gamma rays;

the system further includes an input of energy necessary to the polymerization of the resin with the aid of a convection oven (13), of a radiant oven (13), of an oven (13) with pulsed air or by dielectric heating; and

the thermosetting resin is a resin selected from the group consisting of acrylic resin, benzoxazine, cyanate ester, vinyl ester, urethane, epoxy, phenolic, polybutadiene, polyimide, polyester, and polyurethane.

Fig. 1

Fig. 2a

Fig. 2b

Fig. 2c

**Indice de circularité en fonction de la méthode de réalisation**

*Fig. 3*

**Pourcentage de verre en fonction de la méthode de réalisation**

*Fig. 4*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008318042 A
- US 2871911 A, SHUTTLEWORTH
- US 4168194 A, STILES
- US 4861621 A, KANZAKI
- CA 2746281, ST-CYR
- US 5362542 A, OAZAWA
- US 6612085 B, EDWARDS
- US 5626700 A, KAISER
- US 9149993 B, GIBSON
- CA 2586394, BRANDSTROM
- US 8413396 B, OLIVA